Europäisches Patentamt

European Patent Office

Office européen des brevets

(11) Publication number: **0 296 155 B1**

# EUROPEAN PATENT SPECIFICATION

(45) Date of publication of patent specification:
24.04.91 Bulletin 91/17

(51) Int. Cl.⁵: **F16H 9/20, F16G 5/20**

(21) Application number: 87900938.9

(22) Date of filing: 12.01.87

(86) International application number:
PCT/US87/00040

(87) International publication number:
WO 88/05138 14.07.88 Gazette 88/15

(54) CONTINUOUSLY VARIABLE TRANSMISSION.

(43) Date of publication of application:
28.12.88 Bulletin 88/52

(45) Publication of the grant of the patent:
24.04.91 Bulletin 91/17

(84) Designated Contracting States:
DE FR GB IT SE

(56) References cited:
EP-A- 0 084 702
EP-A- 0 222 637
DE-A- 2 821 698
FR-A- 928 429
US-A- 2 283 392
US-A- 3 383 883

(73) Proprietor: BROWN, Neuburne H Jr
149 So. Beach Rd.
Hope Sound, FL 33455 (US)
Proprietor: PARSONS, Frederick L
HCR Box 103
Pearce, AZ 85625 (US)

(72) Inventor: Parsons,Frederick L
HCR Box 183
Pearce,AZ 85625 (US)

(74) Representative: Lucas, Brian Ronald et al
Lucas, George & Co. 135 Westhall Road
Warlingham Surrey CR3 9HJ (GB)

Jouve, 18, rue Saint-Denis, 75001 PARIS

## Description

This invention relates to a continuously variable transmission in which the ratio between a driving pulley and the driven pulley is continuously variable. The invention will be described with particular reference to use in an automobile but uses outside this field are also possible.

Continuously variable transmission (CVT) has long been recognized as a likely answer to more efficient automatic transmissions but has been relatively slow in gaining widespread commercial use. In Business Week, February 6, 1984 at pages 74-75 there is discussed the basic approach to a currently popular form of CVT. As described therein CVT works by varying the working diameters of two pulleys, each of which is characterized by a V-shaped groove in which sits the pulley belt. To shift into a lower gear, the engine pulley spreads apart dropping the belt lower into its V-shaped groove and, at the same time, the driven shaft pulley closes, forcing the belt to ride higher in its V-groove, thereby effectively decreasing the ratio of the diameters of the engine pulley and the drive shaft pulley.

A critical element of such a system is the belt used. Typically there is used a flexible steel belt with hundreds of steel plates strung together like the links of a watch band. In such a system, the drive shaft pulley pushes the driven shaft pulley into rotation by means of the segments of the belt which are pinched between the sidewalls of the respective groove.

An oil film is included between the walls of the groove formed by the pulley walls and the tips or edges of the steel belt to facilitate displacement of the belt when a speed change is made. Unfortunately, this oil film requires a very high contact force to enable the system to transfer torque between the pulleys and the drive belt. It is of course important that adequate clamping be maintained between the belt and the pulleys if either the pulley is to drive the belt or be driven by the belt without slipping. In particular, it is advantageous that the clamping force be proportional to the torque being transmitted. Moreover, it is important that these high clamping forces be little affected by shock or other load changes. Prior art CVTs have been deficient in these respects.

The features which are defined in the first part of claim 1 and 12 respectively are known from DE-A-2821698.

According to one aspect of the present invention as defined in claim 1 there is provided a continuously variable transmission comprising a driving pulley and a driven pulley, each of which has a pair of side walls which define therebetween a groove which is tapered over at least a portion of its height, means for varying the spacing in the grooved portions simultaneously in opposite senses, and a belt for riding in the grooved portions for coupling the two pulleys, characterized in that

said belt comprises a base portion of a rubber-like compound in which are imbedded a plurality of flexible transverse metal elements each of which has exposed bent end portions having tips which are tapered to essentially conform to the tapered side walls of the driving pulley and the driven pulley.

Preferably, said belt further includes a plurality of cables imbedded completely in the base portion and extending longitudinally for stabilizing the length of the belt.

Advantageously, the intermediate portion of each flexible transverse metal element is only partially imbedded in the base portion.

Preferably, the flexible transverse metal elements are uniformly spaced apart along the length of the belt a distance which is comparable to their dimension along the belt.

In one embodiment, the flexible transverse metal elements are substantially rectangular in cross section.

In another embodiment, the flexible transverse metal elements are substantially circular in cross-section.

Advantageously, each flexible transverse metal element includes a central portion which has an inverted U form.

Preferably, the driving pulley and the driven pulley are mounted on a driving shaft and a driven shaft respectively and means are provided for coupling said driving pulleys and said driven pulley to their respective driving shaft and driven shaft, characterized in that at least one of said means comprises a member which is resilient.

Advantageously, at least one of the means comprises a ring member coupled to a shaft, a ring member coupled to a pulley side wall and a ring member of resilient material clamped between said two last-mentioned ring members in driving engagement therewith.

Preferably, the ring member of resilient material has opposed surfaces which are serrated for engagement with correspondingly serrated surfaces on said ring member coupled to said shaft and on said ring member coupled to said pulley side wall respectively.

Advantageously, the serrations are shaped to resist convergence of adjacent ring members.

Preferably, at least one side wall of at least one of said pulleys is retained on its corresponding shaft by a member which acts through said side wall to provide a clamping force on the belt.

Another aspect of the invention as defined in claim 12 comprises a belt having a base portion of a rubber-like compound in which are imbedded a plurality of flexible transverse metal element, characterized in that each of said flexible transverse metal elements has exposed bent end portions whose tips are tapered

Preferably, a plurality of cables are imbedded completely in the base portion and extend longitudinally for stabilizing the length of the belt.

Advantageously, the intermediate portion of each pin is only partially imbedded in the base portion.

Preferably, the flexible transverse metal elements are uniformly spaced apart, along the length of the belt, a distance which is comparable to their widths.

Advantageously, each flexible transverse metal element is in the form of a pin which includes a central portion which has an inverted U form.

For a better understanding of the invention reference will now be made, by way of example, to the accompanying drawings, in which :

FIG. 1 shows an elevational view, partly in section to expose the interior details, of one embodiment of a CVT, in accordance with the invention ;

FIG. 2 shows on a larger scale and partly in section the portion of the CVT of FIG. 1 used to vary the pulley groove spacings ;

FIG. 3 is an exploded view of the arrangement including a resilient spacing member for supporting the driven pulley ;

FIGS. 4 and 5 are transverse sections through different forms of belts in accordance with the invention ; and

FIGS. 6 and 7 are portions of a longitudinal section of the belts of FIGS. 4 and 5, respectively.

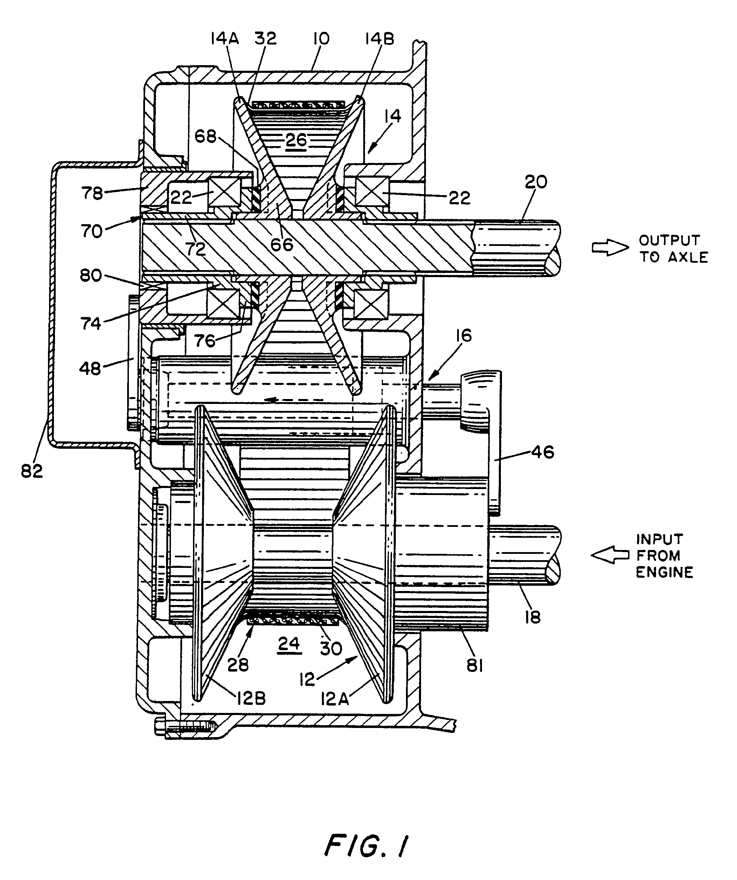

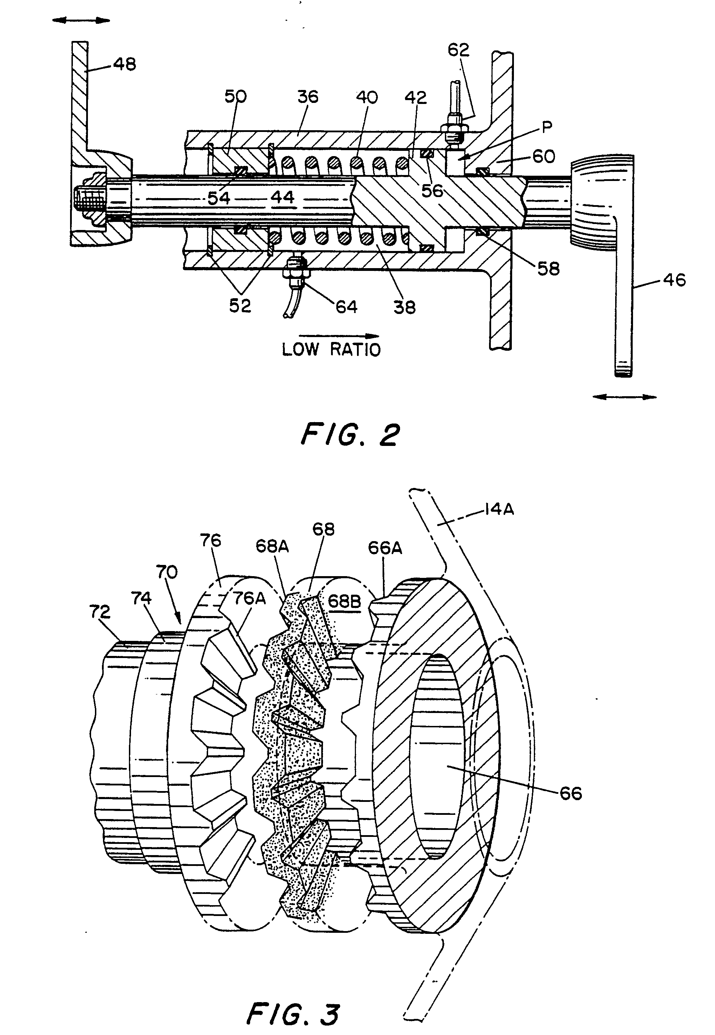

Turning more specifically to the drawings, in Fig. 1 the transmission housing 10 supports within its interior the engine pulley 12 and the drive shaft pulley 14. Each of the pulleys has one sidewall fixed in the horizontal direction, so that the spacing of the groove between the two sidewalls of each pulley is variable. The mechanism for controlling the spacing will be discussed in more detail below in conjunction with FIG. 2, but basically this mechanism is included in a hydraulic actuator unit 16. This actuator unit located between the two pulleys controls the position of the horizontally movable sidewall of each pulley. Since the movable sidewall is opposite for the two pulleys, one, for example being the right wall 12A in pulley 12 and the left wall 14A in pulley 14, movement of the horizontally movable wall 12A of pulley 12 to the left (as viewed in FIG. 1) decreases its spacing from the horizontally fixed wall 12B, whereas movement of the horizontally movable wall 14A of pulley 14 to the left increases its spacing from the horizontally fixed wall 14B. The opposite results are achieved when both walls 12A and 14A are moved to the right.

The engine pulley 12 is coupled to the shaft 18 which is linked to the engine (not shown) and the driven shaft pulley 14 is coupled to the driven shaft 20. The coupling will be described in more detail below. Bearings 22 are included to support rotation of the pulleys and shafts with respect to the housing in the usual fashion.

As is seen, the sidewalls of each of the pulleys 12 and 14 are slanted in the working parts of their widths so that the grooves 24 and 26, respectively, between the sidewalls are tapered, and their widths increase with distance from the pulley axes, which lie along the associated shafts 18 and 20, respectively.

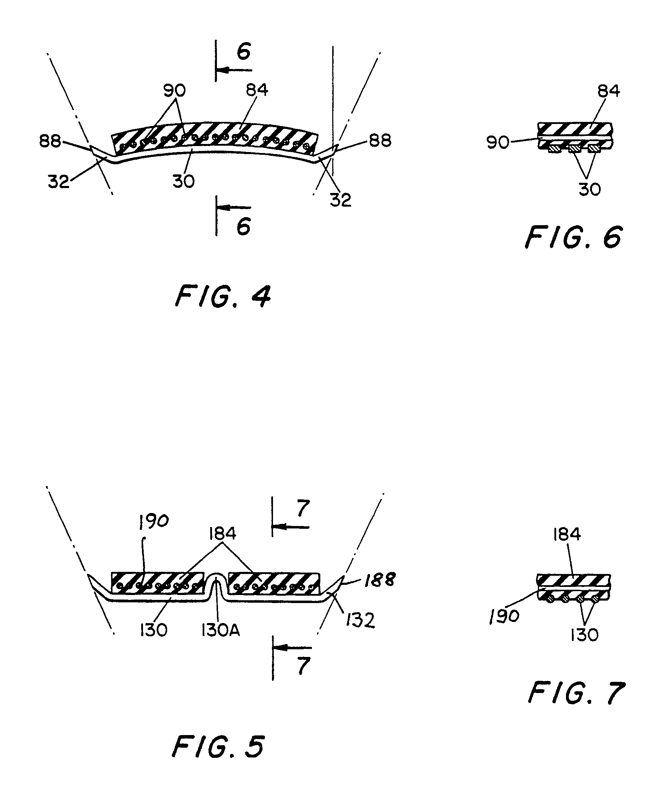

The drive belt 28 rides between the two sidewalls of each of the two pulleys. As is described more fully hereinafter in connection with FIGS. 4 and 5, the belt 28 is provided with transverse metal bands or pins 30 whose end portions 32 are bent and ground at their tips to match the taper of the sidewalls so that a tight slipless contact is made between the tips and the sidewalls of the pulley. The bent ends provide a predesigned spring tension adequate to keep the tips pressed against the sidewalls.

When the sidewalls of pulley 12 are far apart as shown in FIG. 1, the belt 28 will be located close to the shaft 18, so that pulley 12 has a small effective radius and will make several rotations for each rotation of pulley 14 in which the belt 28 rides higher in the groove so that it has a larger effective radius. When the sidewalls of pulley 12 are moved closer together, thereby also moving the sidewalls of pulley 14 farther apart, the belt 28 will rise in pulley 12 and drop in pulley 14 and the ratio of the radii of the two pulleys will thereby change. As will be understood, FIG. 1 depicts the pulleys 12 and 14 in a very low ratio configuration, and any change would normally be in the direction of a higher ratio, i.e., so that the belt would rise in pulley 12 and drop in pulley 14.

Returning to the hydraulic actuator unit 16, shown in more detail in FIG. 2 and used to control the horizontal movement of the horizontally movable sidewalls 12A and 14A, it comprises a cylinder 36 defining a chamber 38 within which is a compression spring 40 which bears against and biases an axial plunger member 42 to the right. The plunger member 42 includes an axial shaft 44 extending axially through the chamber 38 and carrying at its opposite ends brackets 46 and 48 for engagement with the horizontal movable walls 12A and 14A, respectively, of the two pulleys 12 and 14 (see FIG. 1). An annular stop member 50 surrounds the shaft 44 and is axially captured within the chamber 38 by split rings 52. 0-rings 54 and 56 carried by the plunger 42 and the stop member 50 seal the chamber 38 relative to the shaft 44 and the cylinder 36. A further 0-ring 58 establishes a seal between he shaft 44 and the end wall 60 of the cylinder 36.

To effect a ratio change, fluid is introduced into and withdrawn from the chamber 38 by way of a fluid coupling 62 to urge the plunger 42 to the left against the bias of the spring 40. As illustrated in FIG. 2, the spring 40 normally biases the plunger to the low ratio configuration of FIGS. 1 and 2. The pressure provided by the fluid in cavity 38 is controlled by the factors which are normally used to determine the optimum effective gear ratio of an automatic transmission system and will not be discussed in detail herein. Other arrangements are known for controlling the movement and may be substituted. For example, a second fluid coupling 64 may be provided in place of or as a supplement to the spring 40 depending on the control system used.

With reference to FIGS. 1 and 3, the manner in which shafts 18 and 20 are coupled to the sidewall members of the pulleys 12 and 14, respectively, will now be described. For illustrative purposes, the description will be made with reference to the connection for pulley sidewall 14A, but it will be understood to apply to the other pulley sidewalls as well.

As shown in FIG. 1, the sidewall member 14A contains an annular hub portion 66 that is rotatably mounted on the surface of shaft 20. There is no direct driving connection between the sidewall member 14A and the shaft 20. Rather, the driving connection is made through an intermediate resilient ring member 68 and an annular collar member 70. The collar member includes a first cylindrical portion 72 that is splined or otherwise rigidly connected to shaft 20 for rotation therewith. At its axially inner end the collar 70 includes an enlarged diameter portion 74 which forms a seat for the bearing 22 (see FIG. 1). Inwardly of the bearing seal portion 74, the collar is formed with an upstanding flange 76 which engages, in a manner more fully described hereinafter, the intermediate flex ring member 68. The outer bearing seat for the bearing 20 is carried by a non-rotating cap member 78 (FIG. 1) that fits over the collar member 70. To stabilize the unit a sealed bearing unit 80 is provided between the cap member 78 and the collar 70. As shown in FIG. 1, the bracket 48 of the actuator unit 16 engages the axially outer end of the cap member 78 for purposes of control of the width of groove 26 in pulley 14. The other end bracket 46 of the actuator unit 16 engages the axially inner end of a like cap member 81 associated with the movable sidewall member 12A of the pulley 12. An access cover 82 fits over the axially outer ends of the drive shaft 20 and the actuator 16.

As illustrated in Fig. 3, the facing surfaces 76A and 68A of the flange 76 and the ring member 68, respectively, are formed with matching wedge serrations to provide a secure driving engagement therebetween. The other surface 68B of ring member 68 and the facing surface 66A of the hub portion 66 of the sidewall member 14A (shown in phantom) are also formed with matching serrations for the like purpose. As mentioned, the ring member 68 is made of a resilient material, such as a suitable elastomer and is so proportioned as to wedge members 66 and 70 apart when one element is notably displaced with respect to the other. Because brackets 46 and 48 are rigid, the displacement can only be an inward clamping force on the belt. Firstly, and most importantly, since the driving member 76 is clamped by way of the serrations to the resilient member 68, the force clamping the two together will be dependent on the torque being applied to the clamping member 68 and this clamping force will be further transmitted as an inward clamping force between the pulley sidewall to which member 76 is bound and the belt. This force is proportional to the torque being applied. Additionally, this resilient member helps provide isolation against shocks which might affect the system deleteriously, although most of the vibration isolation is provided by the rotational flex or displacement between members 66 and 70.

Advantageously, a driving connection utilizing a resilient element 68, as described, is used between both the horizontally fixed and horizontally moveable sidewalls of each pulley with its associated shaft. In some instances, it may be sufficient if the resilient coupling is provided between only one of the sidewalls and its shaft. In other instances, it may prove sufficient to provide such resilient coupling between only one shaft and one or both of the pulley sidewalls associated with it.

In particular in some instances, it may prove advantageous to use instead, the known "roller wedge" mechanism for coupling the shaft to the pulley wall. This mechanism can also be used to provide a strong clamping force between the belt and the pulley walls which is proportional to the torque applied. In this technique, a roller is enclosed between inwardly tapered portions of the shaft and that pulley wall, such that rotation, for example, of the shaft, coupled with resistance of the wall will cause the roller to try to climb the incline in its enclosure. However, because the shaft cannot move axially because of bearings in the housing, the shaft causes the wall to rotate as well and exerts an inward or clamping force on the belt.

Figs. 4 and 6 illustrate the structure of one embodiment of a drive belt in accordance with this feature of the invention. The belt comprises a matrix or base 84, typically of a rubber compound of the type useful in pulley belts. A plurality of transversely extending pins or bands (metal elements) 30 generally rectangular cross section are imbedded in the base over most of their lengths, only the end portions 32 being free. The end portions 32 are bent and their tips 88 ground so that the belt will sit tightly between the sidewalls. Typically the edges will be ground to an angle of about 25 degrees from the vertical, and the sidewalls forming the grooves in the pulleys are tapered similarly. Other bevels may of course be used. Also imbedded in the base 84 is a plurality of cables or cords 90, suitably fiberglass or the like, which extend longitudinally along the length of the belt to increase its resistance to stretching during operation. Importantly the pins are spaced apart from one another in the longitudinal direction of the belt as seen best in FIG. 6.

FIGS. 5 and 7 show an alternative form of the belt which differs in several respects. In this form the pins or bands 130 are circular in cross section and have end portions 132. Additionally, the base 184 comprising cords 190 is divided transversely into two sections and each pin includes a central section 130A which is an inverted U to increase the flexibility of the belt particularly in the transverse direction.

As previously mentioned, an important characteristic of this belt is that it is designed to make essentially a metal-to-metal contact with the sidewalls of the groove during operation. A metal-to-metal contact is therefore established and maintained so long as the drive is active. Such a contact because of its high frictional characteristics, has many times the holding ability of the contact in a drive in which torque is transmitted through an oil film. Moreover, though ordinarily it is preferred to run the belt completely dry, in some instances it may be useful to have an oil film initially present at the beginning of energizing the drive. In such a case the tips of the pin should be so shaped that any such film is rapidly squeezed out between the two working surfaces so that a metal-to-metal contact is quickly established and thereafter maintained as long as the drive is active.

It is important to avoid overheating of the belt which might destabilize the rubber base. Spacing the pins apart longitudinally and the use of exposed end portions for the metal pins acts to keep the belt from overheating by circulation. Moreover, having the pins only partially imbedded in the matrix also helps avoid overheating. A spacing apart longitudinally comparable to the width of the pin has been found particularly advantageous.

In the two embodiments shown, each of he pins comprises a slightly curved intermediate portion between a pair of end portions which are bent to provide spring action on the tapered tips to keep the tips pressed to the sidewalls. In some instances, it may prove advantageous to provide a more curved intermediate portion, the radius of curvature being chosen to provide an increase in the flexibility of the pins to improve the gripping action between the pin tips and the pulley sidewalls.

Especially in such instances, it may be advantageous to imbed the central portions of the pins more deeply in the rubber base.

The cables provide longitudinal strength and stability of the belt while permitting considerable flexibility in the transverse direction.

It should be apparent that there should be considerable latitude in the choice of materials forming the belt. For example, the rubber-like compound used for the base can take a variety of forms consistent with its desired characteristics of stability despite heating, strong support of the pins and enough flexibility to permit a tight fit even though the pin tips must be permitted to flex in and out as the spacing of the walls is varied. The effective dimension of the pin will change to allow speed change. Tangential initial contact later will be either lengthened or shortened. The pin tins must never lose contact with the pulleys so the pins must have the capacity to make this adjustment.

As previously mentioned, the pins are advantageously essentially of hardened steel but protective coatings may be useful.

## Claims

1. A continuously variable transmission comprising a driving pulley (12) and a driven pulley (14), each of which has a pair of side walls (12A, 12B ; 14A, 14B) which define therebetween a groove (24, 26) which is tapered over at least a portion of its height, means (16) for varying the spacing in the grooved portions simultaneously in opposite senses, and a belt (28) for riding in the grooved portions for coupling the two pulleys (12, 14), characterized in that
said belt (28) comprises a base portion (84 ; 184) of a rubber-like compound in which are imbedded a plurality of flexible transverse metal elements (30 ; 130) each of which has exposed bent end portions (32, 132) having tips (88, 188) which are tapered to essentially conform to the tapered side walls of the driving pulley (12) and the driven pulley (14).

2. A continuously variable transmission as claimed in Claim 1, characterized in that said belt (28) further includes a plurality of cables (90, 190) imbedded completely in the base portion (84, 184) and extending longitudinally for stabilizing the length of the belt (28).

3. A continuously variable transmission as claimed in Claim 1 or 2, characterized in that the intermediate portion of each flexible transverse metal element (30, 130) is only partially imbedded in the base portion (84, 184).

4. A continuously variable transmission in accordance with Claim 1, 2 or 3, characterized in that the flexible transverse metal elements (30, 130) are uniformly spaced apart along the length of the belt (28) a distance which is comparable to their dimension along the belt (28).

5. A continuously variable transmission as claimed in any preceding Claim, characterized in that the flexible transverse metal elements (30) are substantially rectangular in cross section.

6. A continuously variable transmission as claimed in any of Claims 1 to 4, characterized in that the flexible transverse metal elements (130) are substantially circular in cross-section.

7. A continuously variable transmission in accordance with any preceding Claim, characterized in that each flexible transverse metal element (130) includes a central portion (130A) which has an inverted U form.

8. A continuously variable transmission as claimed in any preceding Claim, wherein said driving pulley (12) and said driven pulley (14) are mounted on a driving shaft (18) and a driven shaft (20) respectively and means are provided for coupling said driving pulleys (12) and said driven pulley (14) to their respective driving shaft (18) and driven shaft (29), characterized in that at least one of said coupling means comprises a ring member (76) coupled to the shaft (18 and/or 29), a ring member (66) coupled to a pulley side wall (14A) and a ring member (68) of resilient material clamped between said two last-mentioned ring members (66, 76) in driving engagement therewith.

9. A continuously variable transmission as claimed in Claim 8, characterized in that said ring member (68) of resilient material has opposed surfaces (68A, 68B) which are serrated for engagement with correspondingly serrated surfaces (76A, 66A) on said ring member (76) coupled to said shaft (20) and on said ring member (66) coupled to said pulley side wall (14A) respectively.

10. A continuously variable transmission as claimed in Claim 9, characterized in that said serrations are shaped to resist convergence of adjacent ring members.

11. A continuously variable transmission as claimed in any preceding Claim, characterized in that at least one side wall (12A, 14B) of at least one of said pulleys (12, 14) is retained on its corresponding shaft (18, 20) by a member (46, 48) which acts through said side wall (12A, 14B) to provide a clamping force on the belt (28).

12. A belt (28) for use in a transmission, the belt comprising a base portion (84, 184) of a rubber-like compound in which are imbedded a plurality of flexible transverse metal element (30, 130), characterized in that each of said flexible transverse metal elements (30, 130) has exposed bent end portions (32, 132) whose tips (88, 188) are tapered.

13. A belt as claimed in Claim 12, characterized in that a plurality of cables (90, 190) are imbedded completely in the base portion (84, 184) and extend longitudinally for stabilizing the length of the belt (28).

14. A belt as claimed in Claim 12 or 13, characterized in that the intermediate portion of each transverse metal element (30, 130) is only partially imbedded in the base portion (84, 184).

15. A belt as claimed in Claim 12, 13 or 14, characterized in that the flexible transverse metal elements (30, 130) are uniformly spaced apart, along the length of the belt (28), a distance which is comparable to their widths.

16. A belt as claimed in Claim 12, 13, 14 or 15, characterized in that each flexible transverse metal element is in the form of a pin (130) which includes a central portion (130A) which has an inverted U form.

## Ansprüche

1. Stufenloses Getriebe mit einer antreibenden Rolle (12) und einer angetriebenen Rolle (14), von welchen jede ein eine Nut (24,26) bildendes Seitenwandpaar (12A, 12B ; 14A, 14B) aufweist und die Nuten über wenigstens einen Teil ihrer Höhe konisch ausgebildet sind, mit Elementen (16) zum gleichzeitigen Andern des Abstandes der Nutenwände in entgegengesetzten Richtungen, und mit einem Gurt (28), der zum Verbinden der beiden Rollen (12,14) in den genuteten Teilen läuft, dadurch gekennzeichnet, daß der Gurt (28) aus einem Basisteil (84 ; 184) aus einer gummiartigen Zusammensetzung besteht, in welchem mehrere flexible, sich quer erstreckende Metallteile (30 ; 130) eingebettet sind, von denen jedes hervorstehende, gekrümmte Endteile (32, 132) mit Spitzen (88 ; 188) aufweist, die konisch auslaufen, um im wesentlichen an die konischen Seitenwände der antreibenden Rolle (12) und der angetriebenen Rolle (14) angepaßt zu sein.

2. Stufenloses Getriebe nach Anspruch 1, dadurch gekennzeichnet, daß der Gurt (28) außerdem mehrere Seile (90, 190) enthält, die vollständig in dem Basisteil (84, 184) eingebettet sind und sich in Längsrichtung erstrecken, um die Gurtlänge zu stabilisieren.

3. Stufenloses Getriebe nach Anspruch 1 oder 2, dadurch gekennzeichnet, daß der mittlere Teil eines jeden flexiblen, sich quer erstreckenden Metallteils (30, 130) nur teilweise im Basisteil (84, 184) eingebettet ist.

4. Stufenloses Getriebe nach einem der Ansprüche 1 bis 3, dadurch gekennzeichnet, daß die flexiblen, sich quer erstreckenden Metallteile (30, 130) mit gleichmäßigen Abständen über die Länge des Gurts (28) verteilt angeordnet sind, wobei die Abstände mit den Abmessungen der Metallteile in Längsrichtung des Gurtes (28) vergleichbar sind.

5. Stufenloses Getriebe nach einem der vorhergehenden Ansprüche, dadurch gekennzeichnet, daß die flexiblen, sich quer erstreckenden Teile (30) einen im wesentlichen rechteckigen Querschnitt haben.

6. Stufenloses Getriebe nach einem der Ansprüche 1 bis 4, dadurch gekennzeichnet, daß die flexiblen, sich quer erstreckenden Teile (130) einen im wesentlichen runden Querschnitt haben.

7. Stufenloses Getriebe nach einem der vorhergehenden Ansprüche, dadurch gekennzeichnet, daß jedes flexible, sich quer erstreckende Metallteil (130) ein Mittelteil (130A) mit umgekehrter U-Form aufweist.

8. Stufenloses Getriebe nach einem der vorhergehenden Ansprüche, wobei die antreibende Rolle (12) und die angetriebene Rolle (14) an einer antreibenden Welle (18) bzw. an einer angetriebenen Welle (20) befestigt und Mittel zum Verbinden der antreibenden Rolle (12) und der angetriebenen Rolle (14) mit ihren entsprechenden antreibenden und angetriebenen Wellen (18, 20) vorgesehen sind, dadurch gekennzeichnet, daß wenigstens eines der Verbindungsteile aus einem mit der Welle (18 und/oder 20) verbundenen Ring (76), einem mit einer Rollenseitenwand (14A) verbundenen Ring (66) und aus einem Ring (68) aus elastischem Material besteht, der zwischen den zwei letztgenannten Ringen (66, 76) zum antreibenden Eingriff eingespannt ist.

9. Stufenloses Getriebe nach Anspruch 8, dadurch gekennzeichnet, daß der aus elastischem Material bestehende Ring (68) sich gegenüberliegende Flächen (68A, 68B) aufweist, welche zum Eingriff mit gezahnten Flächen (76A, 66A) des mit der Welle (20) verbundenen Ringes (76) und des mit der Rollenseitenwand (14A) verbundenen Ringes (66) gezahnt sind.

10. Stufenloses Getriebe nach Anspruch 9, dadurch gekennzeichnet, daß die Zahnungen so ausgebildet sind, daß sie einer Annäherung der Ringe einen Widerstand entgegensetzen.

11. Stufenloses Getriebe nach einem der vorhergehenden Ansprüche, dadurch gekennzeichnet, daß wenigstens eine Seitenwand (12A, 14B) wenigstens einer der Rollen (12,14) durch ein Teil (46,48), das über die Seitenwand (12A, 14B) wirkt, um eine Spannkraft auf den Gurt (28) auszuüben, auf ihrer entsprechenden Welle (18,20) gehalten wird.

12. Gurt (28) mit einem Basisteil (84,184) aus einer gummiartigen Verbindung, in welchem mehrere flexible, sich quer erstreckende Metallteile (30, 130) eingebettet sind, zur Verwendung in einem Getriebe, dadurch gekennzeichnet, daß jedes der flexiblen, sich quer erstreckenden Metallteile (30, 130) hervorstehende, gebogene Endteile (32, 132) hat, deren Spitzen (88, 188) konisch sind.

13. Gurt nach Anspruch 12, dadurch gekennzeichnet, daß mehrere Seile (90, 190) vollständig in dem Basisteil (84, 184) eingebettet sind und sich zur Stabilisierung der Gurtlänge in Längsrichtung erstrecken.

14. Gurt nach Anspruch 12 oder 13, dadurch gekennzeichnet, daß der mittlere Teil eines jeden, sich quer erstreckenden Metallteils (30, 130) nur teilweise im Basisteil (84, 184) eingebettet ist.

15. Gurt nach einem der Ansprüche 12 bis 14, dadurch gekennzeichnet, daß die flexiblen, sich quer erstreckenden Metallteile (30, 130) in Längsrichtung des Gurtes (28) mit gleichmäßigen Abständen, die mit ihren Breiten vergleichbar sind, angeordnet sind.

16. Gurt nach einem der Ansprüche 12 bis 15, dadurch gekennzeichnet, daß jedes flexible, sich quer erstreckende Metallteil die Form eines Stiftes (130) hat, dessen Mittelteil (130A) eine umgekehrte U-Form aufweist.

**Revendications**

1. Transmission variable en continu, comprenant une poulie menante (12) et une poulie menée (14), dont chacune comporte une paire de parois latérales (12A, 12B ; 14A, 14B) qui définissent entre elles une gorge (24, 26) qui va en s'amenuisant sur au moins une partie de sa hauteur, des moyens (16) destinés à faire varier l'écart entre les parties formant des gorges, simultanément et dans des sens opposés, et une courroie (28) destinée à être montée sur les parties formant des gorges en vue de coupler les deux poulies, caractérisée en ce que

ladite courroie (28) comporte une partie de base (84, 184) réalisée en un matériau composite analogue à du caoutchouc, dans laquelle sont incorporés un grand nombre d'éléments métalliques transversaux souples (30, 130) dont chacun comporte des parties d'extrémité exposées à l'extérieur (32, 132) dont les bouts (88, 188) sont biseautés afin de se conformer sensiblement aux parois latérales allant en s'amenuisant de la poulie menante (12) et de la poulie menée (14).

2. Transmission variable en continu selon la revendication 1, caractérisée en ce que ladite courroie (28) comporte en outre une pluralité de câbles (90, 190) complètement noyés dans la partie de base (84, 184) et s'étendant longitudinalement en vue de maintenir stable la longueur de la courroie (28).

3. Transmission variable en continu selon la revendication 1 ou 2, caractérisée en ce que la partie intermédiaire de chaque élément métallique transversal souple (30, 130) n'est que partiellement noyée dans la partie de base (84, 184).

4. Transmission variable en continu selon la revendication 1, 2 ou 3, caractérisée en ce que les éléments métalliques transversaux souples (30, 130) sont espacés uniformément dans le sens de la longueur de la courroie (28), d'une distance qui est comparable à leur dimension dans le sens de la longueur de la courroie (28).

5. Transmission variable en continu selon l'une quelconque des revendications précédentes, caractérisée en ce que les éléments métalliques transversaux souples (30) ont une section transversale sensiblement rectangulaire.

6. Transmission variable en continu selon l'une quelconque des revendications précédentes, caractérisée en ce que les éléments métalliques transversaux souples (130) ont une section transversale sensiblement circulaire.

7. Transmission variable en continu selon l'une quelconque des revendications précédentes, caractérisée en ce que chacun des éléments métalliques transversaux souples (130) comporte une partie centrale (130A) en forme de U inversé.

8. Transmission variable en continu selon l'une quelconque des revendications précédentes dans laquelle ladite poulie menante (12) et ladite poulie menée (14) sont montées respectivement sur un arbre moteur (18) et sur un arbre entraîné (20) et dans laquelle des moyens sont prévus afin de coupler ladite poulie menante (12) et ladite poulie menée (14) respectivement à leur arbre moteur (18) et à leur arbre entraîné (20), caractérisé en ce qu'au moins un desdits moyens d'accouplement comporte un élément annulaire couplé à l'arbre (18 et/ou 20), un élément annulaire (66) couplé à une paroi latérale (14A) de poulie, et un élément annulaire (68) en matériau élastique pincé entre lesdits deux éléments annulaires (66, 66) mentionnés en dernier, en prise d'entraînement avec ceux-ci.

9. Transmission variable en continu selon la revendication 8, caractérisée en ce que ledit élément annulaire (68) en matériau élastique présente des surfaces opposées (68A, 68B) qui comportent des indentations destinées à se mettre en prise avec des surfaces (76A, 66A) dentées de façon correspondante, situées respectivement sur ledit élément annulaire (76) couplé audit arbre (20) et sur ledit élément annulaire (66) couplé à ladite paroi latérale (14A) de poulie.

10. Transmission variable en continu selon la revendication 9, caractérisée en ce que lesdites indentations ont une forme telle qu'elles s'opposent à la convergence des éléments annulaires voisins.

11. Transmission variable en continu selon l'une quelconque des revendications précédentes, caractérisée en ce qu'au moins une des parois transversales (12A, 14B) d'au moins une des poulies (12, 14) est retenue sur son arbre (18, 20) correspondant, au moyen d'un élément (46, 48) qui agit par l'intermédiaire de ladite paroi latérale (12A, 14B) afin de procurer une force de serrage s'exerçant sur la courroie (28).

12. Courroie (28) destinée à être utilisée dans une transmission, la courroie comportant une partie de base (84, 184) réalisée en un matériau composite analogue à du caoutchouc, dans laquelle sont noyés un grand nombre d'éléments métalliques transversaux souples (30, 130), caractérisée en ce que chacun desdits éléments métalliques transversaux souples (30, 130) comporte des parties d'extrémité exposées à l'extérieur recourbées (32, 132), dont les bouts (88, 188) sont biseautés.

13. Courroie selon la revendication 12, caractérisée en ce qu'une pluralité de câbles (90, 190) sont complètement noyés dans la partie de base (84, 184) et s'étendent longitudinalement afin de maintenir stable la longueur de la courroie (28).

14. Courroie selon la revendication 12 ou 13, caractérisée en ce que la partie intermédiaire de chaque élément métallique transversal (30, 130) est seulement partiellenent noyée dans la partie de base (84, 184).

15. Courroie selon la revendication 12, 13 ou 14, caractérisée en ce que les éléments métalliques transversaux souples (30, 130) sont uniformément espacés les uns des autres dans le sens de la longueur de la courroie (28) d'une distance qui est comparable à leur largeur.

16. Courroie selon la revendication 12, 13, 14 ou 15, caractérisée en ce que chaque élément métallique transversal souple a la forme d'une tige (130) qui comporte une partie centrale (130A) qui a la forme d'un U inversé.

FIG. 1

FIG. 2

FIG. 3

10

FIG. 4

FIG. 6

FIG. 5

FIG. 7